# EUROPÄISCHE PATENTSCHRIFT

(11) **EP 1 378 397 B1**
(45) Veröffentlichungstag und Bekanntmachung des Hinweises auf die Patenterteilung: **24.11.2004**
(21) Anmeldenummer: 03014911.6
(22) Anmeldetag: 01.07.2003
(51) Int. Cl.: B60R 5/04

(54) **Vorrichtung und Verfahren zur manuellen Höhenverstellung eines Ladebodens eines Kraftfahrzeuges**
Device and method for manual height adjustment of a vehicle load floor
Dispositif et méthode pour le réglage manuel en hauteur d'un plancher de charge de véhicule

(30) Priorität: 05.07.2002 DE 10230205
(43) Veröffentlichungstag der Anmeldung: 07.01.2004
(73) Patentinhaber: DaimlerChrysler AG, 70567 Stuttgart (DE)
(72) Erfinder: Dieterle, Michael, 71093 Weil im Schönbuch (DE); Guschke, Jochen, 71263 Weil der Stadt (DE); Wintermantel, Fred, 71034 Böblingen (DE)

(56) Entgegenhaltungen:
- EP-A- 0 438 000
- FR-A- 2 409 172
- PATENT ABSTRACTS OF JAPAN vol. 007, no. 102 (M-211), 30. April 1983 (1983-04-30) & JP 58 022735 A (NISSAN JIDOSHA KK), 10. Februar 1983 (1983-02-10)

## Beschreibung

Die Erfindung betrifft eine Vorrichtung zur Führung eines höhenverstellbaren Ladebodens gemäß Oberbegriff des Anspruchs 1 und ein Verfahren zur manuellen Höhenverstellung eines Ladebodens gemäß Anspruch 12.

Vorrichtungen und Verfahren der hier angesprochenen Art sind bekannt (DE 199 06 648 A1). Die Vorrichtung dient zur Führung eines im Gepäckraum eines Kraftfahrzeugs vorgesehen Ladebodens und umfasst weist zwei voneinander beabstandete, identische Führungsbahnen, in denen mit dem Ladeboden verbundene Führungsrollen geführt sind. Die Führungsbahnen weisen jeweils einen schräg zu einer gedachten Horizontalen verlaufenden Führungsbahnabschnitt auf, an dessen Ende sich ein in etwa parallel zur Horizontalen verlaufender zweiter Führungsbahnabschnitt anschließt. Aufgrund dieser Ausgestaltung der Führungsbahnen ist der Ladeboden in eine untere Position und in eine höherliegende, obere Position verstellbar, um beispielsweise bei umgeklappter Sitzanordnung einen Niveaausgleich zu schaffen. Es hat sich gezeigt, dass beim manuellen Verstellen des Ladebodens dieser ungebremst in die untere Position fällt, wenn der Bediener den Ladeboden los lässt, solange der Ladeboden im Bereich des schrägen Führungsbahnabschnitts geführt wird.

Es ist Aufgabe der Erfindung eine Vorrichtung der eingangs genannten Art zu schaffen, bei der ein Zurückfallen des Ladebodens -der Schwerkraft folgend- in die untere Position bei dessen Verstellung von der unteren in die obere Position verhindert werden kann. Ein weiteres Ziel der Erfindung besteht darin, ein Verfahren zum manuellen Verstellen des Ladebodens zu schaffen, das eine einfache und funktionssichere Einhandbedienung des Ladebodens ermöglicht.

Zur Lösung der Aufgabe wird eine Vorrichtung mit den Merkmalen des Anspruchs 1 vorgeschlagen. Diese zeichnet sich dadurch aus, dass die mindestens eine Führungsbahn eine Rückfallsperre aufweist, die bei einer Verlagerung des Ladebodens von der unteren in die obere Position nach Erreichen beziehungsweise Durchlaufen einer Zwischenposition den schrägen Führungsbahnabschnitt sperrt. Unter "Sperren" ist zu verstehen, dass der Ladeboden an einem Zurückfallen in den schräg verlaufenden Führungsbahnabschnitt beziehungsweise innerhalb des schrägen Führungsbahnabschnitts gehindert wird. Aufgrund dieser Ausgestaltung kann eine einfache Bedienung der Vorrichtung bei gleichzeitig hoher Funktionssicherheit gewährleistet werden.

Die Führungsbahn kann beispielsweise durch eine Schiene oder mehrere, miteinander verbundene beziehungsweise verbindbare Schienen gebildet sein. Bei einer besonders vorteilhaften Ausführungsform der Vorrichtung ist die Führungsbahn von einer Kulisse, also von einer Nut oder mehreren miteinander verbundenen Nuten, die beispielsweise in eine Platte eingebracht sind, gebildet. Bei beiden Ausführungsvariante ist praktisch jeder beliebige Verlauf der Führungsbahn realisierbar, das heißt, die Führungsbahn kann geradlinig oder gekrümmt ausgebildet sein oder gerade und gekrümmte Abschnitte aufweisen.

In bevorzugter Ausführungsform weist die Rückfallsperre ein in der Führungsbahn verschiebbar gelagertes Sperrelement auf, das mittels eines Mechanismus in eine den schrägen Führungsbahnabschnitt blockierende Sperrstellung verlagerbar ist. Der Mechanismus kann beispielsweise derart ausgebildet sein, dass er nach dem "Push-Push-Prinzip" arbeitet, das zum Beispiel in ähnlicher Form zum Ein- und Ausfahren von Kugelschreiberminen eingesetzt wird. Aufbau und Funktion eines derartigen Mechanismus sind allgemein bekannt, so dass hier nicht näher darauf eingegangen wird.

Bevorzugt wird auch ein Ausführungsbeispiel der Vorrichtung, bei dem die Rückfallsperre eine in der Führungsbahn drehbeweglich gelagerte Klappe aufweist, die mittels Federkraft an einen Anschlag angelegt ist, wobei der Anschlag so angeordnet ist, dass die Klappe den schrägen Führungsbahnabschnitt sperrt, und dass die Klappe bei einer Verlagerung des Ladebodens von der unteren in die obere Position in eine Freigabestellung verlagerbar ist. Die Klappe kann beispielsweise durch das in der Führungsbahn geführte Führungselement selbst oder durch ein separates, mit dem Ladeboden gekoppeltes Mittel betätigt, das heißt aus seiner durch die Federkraftbeaufschlagung festgelegten Vorzugs/Sperrstellung in die Freigabestellung entgegen der Federkraft gedrückt werden und schnappt in die Sperrstellung zurück, nachdem das Führungselement die Klappe passiert hat. Diese Form der Rückfallsperre weist einen besonders einfachen und somit kostengünstigen Aufbau auf.

Weiterhin wird ein Ausführungsbeispiel der Vorrichtung bevorzugt, das sich dadurch auszeichnet, dass die Rückfallsperre ein in der Führungsbahn drehbeweglich gelagertes Sperrelement aufweist, das mit einer Rätsche oder einer in einer Richtung wirkenden Freilaufmechanik gekoppelt ist. Das Sperrelement ist also nur in einer Richtung drehbar, während es in der anderen Richtung blockiert ist. Die Rätsche ermöglicht eine stufige Drehbewegung des Sperrelements in vorgegebenen Winkelbereichen, während mit der Freilaufmechanik ein stufenloses Verschwenken beziehungsweise Verdrehen des Sperrelements in der dafür vorgesehenen Richtung realisierbar ist.

Bei den Ausführungsformen der Vorrichtung, bei denen ein Verstellen des Sperrelements in seine Freigabestellung nicht mehr vorgesehen ist, nachdem das Führungselement auf seinem Weg zur oberen Ladebodenposition das Sperrelement passiert hat, ist die Führungsbahn mit einer "Umgehung" versehen, über die das Führungselement bei seiner Verlagerung von der oberen Ladebodenposition in die untere Ladebodenposition am Sperrelement vorbei wieder zurück in den schrägen Führungsbahnabschnitt gelangt.

Weitere vorteilhafte Ausführungsbeispiele der Vorrichtung ergeben sich aus Kombinationen der in den Unteransprüchen genannten Merkmale.

Zur Lösung der Aufgabe wird auch ein Verfahren mit den Merkmalen des Anspruchs 12 vorgeschlagen. Dieses zeichnet sich durch eine hohe Funktionssicherheit und einfache Bedienbarkeit aus. Aufgrund der erfindungsgemäßen Ausgestaltung der Höhenverstellvorrichtung für den Ladeboden ist eine Höhenverstellung des Ladebodens mit nur einer Hand ohne weiteres möglich. Hierzu muss der Bediener den Ladeboden nur mit einer Zugkraft und nach Erreichen der Zwischenposition mit einer Druckkraft beaufschlagen. Ein präzises Führen beziehungsweise Einfädeln des Führungselements in den gewünschten Führungsbahnabschnitt ist nicht erforderlich.

Vorteilhafte Ausführungsformen des Verfahrens ergeben sich aus Kombinationen der aus den Unteransprüchen hervorgehenden Merkmale.

Die Erfindung wird im Folgenden anhand der Zeichnung näher erläutert. Es zeigen:
- Figuren 1A und 1B: jeweils einen Ausschnitt eines ersten Ausführungsbeispiels der erfindungsgemäßen Vorrichtung in unterschiedlichen Funktionsstellungen,
- Figur 2: eine Prinzipskizze eines zweiten Ausführungsbeispiels der Vorrichtung und
- Figur 3: eine Prinzipskizze eines dritten Ausführungsbeispiels der Vorrichtung in perspektivischer Darstellung.

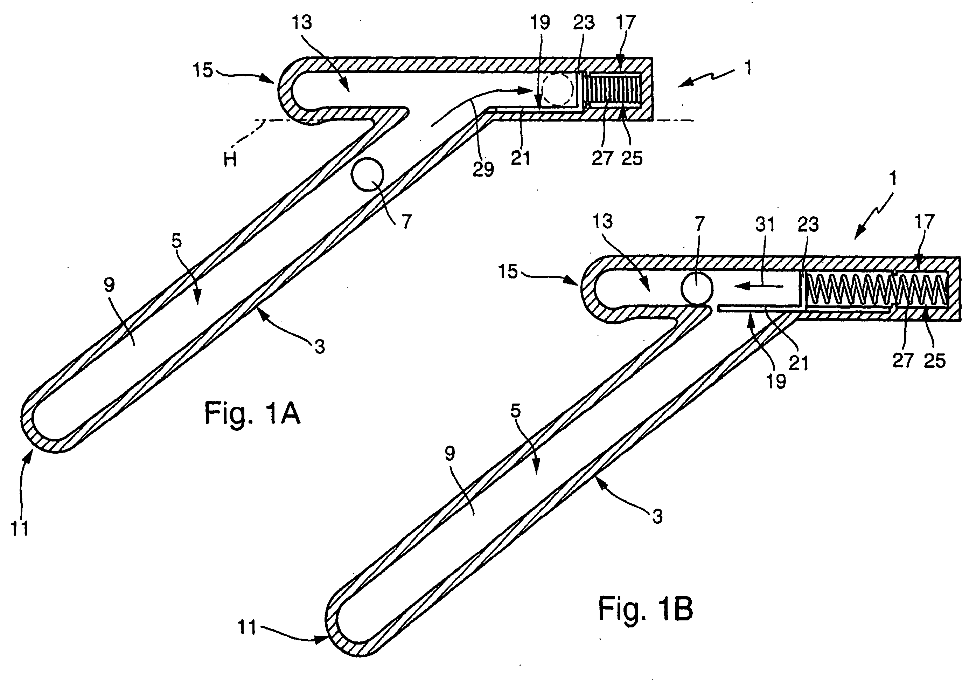

Figur 1A zeigt einen Ausschnitt eines Ausführungsbeispiels einer Vorrichtung 1 zum Führen eines nicht dargestellten, plattenförmigen oder als Rollo ausgebildeten Ladebodens eines Kraftfahrzeugs. Der üblicherweise im Gepäckraum angeordnete Ladeboden ist in seiner Höhe relativ zum Fahrzeugboden verstellbar. Zur Führung des Ladebodens sind seitlich im Gepäckraum einander gegenüberliegend angeordnete Kulissen befestigt, von denen in Figur 1A die Kulisse 3 dargestellt ist. Bei diesem Ausführungsbeispiel wird davon ausgegangen, dass die Kulissen identisch ausgebildet sind, so dass deren Aufbau und Funktion im Folgenden anhand der Kulisse 3 näher erläutert wird.

Die Kulisse 3 weist eine Führungsbahn 5 auf, die von einer schlitzförmigen Ausnehmung beziehungsweise Nut gebildet ist. Die Seitenwände der Führungsbahn 5 verlaufen hier rein beispielhaft parallel zueinander und senkrecht zu einer den Boden bildenden Wand. In der Führungsbahn 5 ist ein mit dem Ladeboden drehfest oder drehbeweglich verbundenes Führungselement 7 mit Spiel verschieblich geführt. Das Führungselement 7 ist hier von einem Lagerzapfen mit kreisrundem Querschnitt gebildet und kann beispielsweise auch von einer Rolle oder ähnlichem gebildet sein. Das Führungselement 7 ist in der Führungsbahn 5 drehbeziehungsweise schwenkbar, so dass bei einer Verlagerung des Ladenbodens von einer unteren in eine obere Position und umgekehrt, in denen der Ladeboden üblicherweise horizontal angeordnet ist, der Ladeboden gegenüber der die Verlagerung vornehmenden Person gekippt werden kann, was die Handhabbarkeit verbessert.

Die Führungsbahn 5 weist einen ersten, geradlinigen Führungsbahnabschnitt 9 auf, der schräg zu einer mit gestrichelter Linie angedeuteten Horizontalen H verläuft. Unter "schräg" wird jeder Winkel ungleich 0° verstanden, das heißt, der schräge Führungsbahnabschnitt verläuft bei keinem Ausführungsbeispiel parallel zur Horizontalen H. Die Kulisse 3 ist im Gepäckraum derart angeordnet, dass der schräge Führungsbahnabschnitt 9 in Richtung einer vor dem Gepäckraum des Kraftfahrzeugs stehenden Person ansteigt. Der schräg verlaufende Führungsbahnabschnitt 9 ist an seinem unteren Ende durch einen gekrümmten, an die Außenkontur des Führungselements 7 angepassten Wandabschnitt verschlossen, der als Anschlag 11 für das Führungselement 7 dient. Zur Anordnung des Ladebodens in seiner unteren Position wird das Führungselement 7 gegen den Anschlag 11 geführt.

An seinem dem Anschlag 11 gegenüberliegenden Ende mündet der erste Führungsbahnabschnitt 9 in etwa in die Mitte eines zweiten, geradlinigen Führungsbahnabschnitts 13, der hier im Wesentlichen parallel zur Horizontalen H verläuft. Dadurch ergibt sich für die Führungsbahn 5 eine T-Form. Der zweite Führungsbahnabschnitt 13 ist an seinem linken Ende durch eine gekrümmte, als Anschlag 15 für das Führungselement 7 dienende Wandung verschlossen, deren Krümmung an die Außenkontur des Führungselements 7 angepasst ist. Zur Anordnung des Ladebodens in seiner oberen Position wird das Führungselement 7 gegen den Anschlag 15 geführt.

Am rechten Endbereich des zweiten Führungsbahnabschnitts 13 ist eine Rückfallsperre 17 angeordnet. Die Rückfallsperre 17 dient dazu, bei einer Verlagerung des Ladebodens von der unteren in die obere Position ein ungewolltes Zurückfallen des Führungselements 7 in den schrägen Führungsbahnabschnitt 9 zu verhindern, nachdem es sich bereits im zweiten Führungsbahnabschnitt 13 befindet.

Die Rückfallsperre 17 weist ein im zweiten Führungsbahnabschnitt 13 verschieblich gelagertes Sperrelement 19 auf, das hier eine L-Form aufweist, die durch ein in Längserstreckung des zweiten Führungsbahnabschnitts 13 verlaufendes erstes Wandteil 21 und ein senkrecht dazu verlaufendes zweites Wandteil 23 gebildet ist. Das Sperrelement 19 ist mittels eines nicht näher dargestellten Mechanismus 25, der nach dem Push-Push-Prinzip arbeitet, wie es beispielsweise in ähnlicher Form bei Kugelschreiberminen eingesetzt wird, verlagerbar. Von dem Mechanismus 25 ist lediglich ein hier beispielhaft als Druckfeder angedeutetes Federelement 27 erkennbar. Der Aufbau und die Funktion der Push-Push-Mechanik ist allgemein bekannt, zum Beispiel aus der DE 197 11 331 A1, so dass hier nicht näher darauf eingegangen wird.

Die Funktion der Rückfallsperre 17 wird im Folgenden anhand einer Ladebodenverstellung näher erläutert. Der Ladeboden befindet sich in seiner unteren Position, in der das Führungselement 7 am Anschlag 11 anliegt. Der Bediener löst zunächst eine üblicherweise vorgesehene Ladebodenfixierung, klappt den Ladeboden durch Verschwenken des Führungselements 7 ein wenig nach oben und zieht den Ladeboden in seine Richtung, also zu sich her. Dabei gleitet das Führungselement 7 entlang des schrägen Führungsbahnabschnitts 9 nach oben, wie in Figur 1A dargestellt. Aufgrund der Zugkraftbeaufschlagung des Ladebodens wird das Führungselement 7 bei Verlassen des schrägen Führungsbahnabschnitts 9 in Richtung des rechten, die Rückfallsperre 17 aufweisenden Endes des zweiten Führungsbahnabschnitts 13 gezogen, wie in Figur 1A mit einem Pfeil 29 angedeutet. Das sich nun in einer zwischen der unteren und der oberen Ladebodenposition liegenden Zwischenposition befindliche Führungselement 7 wird gegen das in Freigabestellung angeordnete Sperrelement 19 verlagert (in Figur 1A gestrichelt angedeutet), wodurch aufgrund der Druckkraftbeaufschlagung des Sperrelements 19 der Mechanismus 25 auslöst und das Sperrelement 19 mittels Federkraft in Richtung auf das gegenüberliegende Ende des Führungsbahnabschnitts 13 verlagert, wie in Figur 1B mit einem Pfeil 31 angedeutet. Dabei schiebt sich das erste Wandteil 21 des Sperrelements 19 über die Öffnung des schrägen Führungsbahnabschnitts 9 und sperrt diesen dadurch ab, so dass das Führungselement 7 nicht in diesen zurückfallen kann. In Figur 1B ist das Sperrelement 19 in Sperrstellung dargestellt. Der Bediener muss jetzt den Ladeboden nur noch von sich wegdrücken, um das Führungselement 7 gegen den Anschlag 15 zu verlagern, der die obere Ladebodenposition definiert. Der Ladeboden wird dann heruntergeklappt und in dieser Position fixiert.

Um den Ladeboden von der oberen in die untere Position zu verstellen, wird umgekehrt vorgegangen, das heißt, der Bediener zieht nun an dem Ladeboden, wodurch das Führungselement 7 gegen das in Sperrstellung (Figur 1B) befindliche Sperrelement 19 gedrückt wird. Dieses wird vom Führungselement 7 entgegen der Federkraft bis in seine Freigabestellung (Figur 1A) gedrückt, wo es selbsttätig verrastet und in dieser Stellung gehalten wird. Der Bediener drückt nun gegen den Ladeboden, wodurch das Führungselement 7 im zweiten Führungsbahnabschnitt 13 nach links verlagert wird, bis es den schrägen Führungsbahnabschnitt 9 erreicht und in diesen hineinfällt. Aufgrund der Schwerkraft rutscht der Ladeboden jetzt selbstständig in seine untere Ladebodenposition zurück.

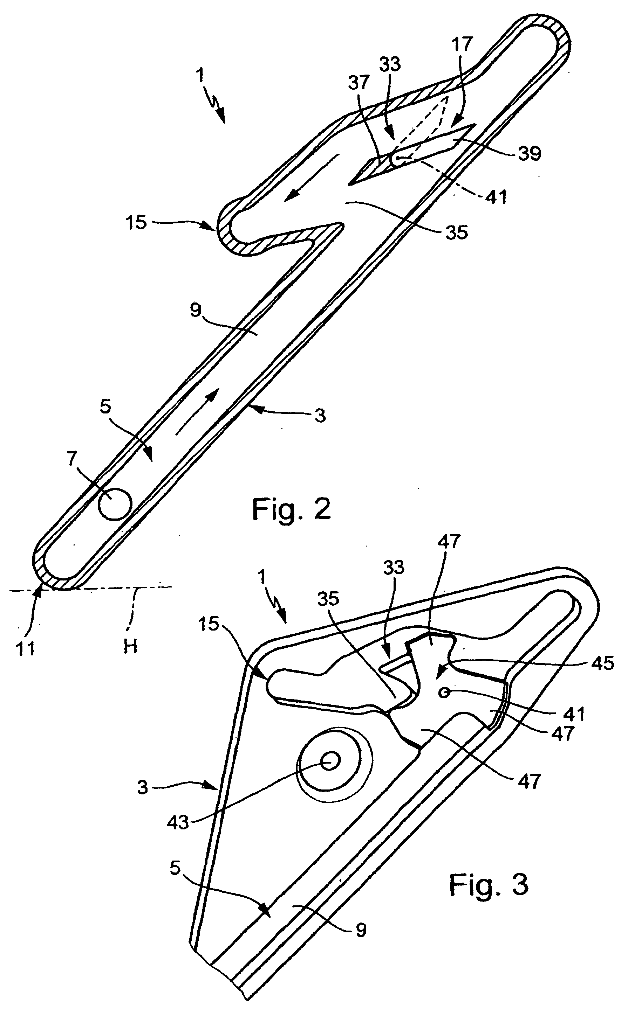

Figur 2 zeigt in Draufsicht ein zweites Ausführungsbeispiel der Vorrichtung 1. Gleiche Teile sind mit gleichen Bezugszeichen versehen, so dass insofern auf die Beschreibung zu den vorangegangenen Figuren verwiesen wird. Die Kulisse 3 weist eine Führungsbahn 5 mit einem ersten, schräg zur Horizontalen H verlaufenden Führungsbahnabschnitt 9, in den in seinem oberen Bereich seitlich ein zweiter, einen abgeknickten Verlauf aufweisender Führungsbahnabschnitt 33 mündet, an dessen Ende sich der die obere Ladebodenposition bestimmende Anschlag 15 befindet. Vom Anschlag 15 geht ein dritter Führungsbahnabschnitt 35 aus, der unterhalb des zweiten Führungsbahnabschnitts 33 seitlich in den schrägen Führungsbahnabschnitt 9 mündet. Die zweiten und dritten Führungsbahnabschnitte 33 und 35, die abschnittsweise in etwa parallel zueinander verlaufen, sind durch eine Wandung 37 voneinander getrennt.

In der Führungsbahn 5 ist die Rückfallsperre 17 angeordnet, die bei dem in Figur 2 dargestellten Ausführungsbeispiel eine Klappe 39 umfasst, die um eine senkrecht zur Bildebene der Figur 2 verlaufende Achse 41 schwenkbar ist. Die Klappe 39 ist mit Hilfe eines nicht dargestellten Federelements gegen einen ebenfalls nicht dargestellten Anschlag verlagerbar, wobei der Anschlag so angeordnet ist, dass die Klappe 39 den schrägen Führungsbahnabschnitt 9 sperrt. In Figur 2 ist die Klappe 39 mit durchgezogener Linie in Sperrstellung und mit gestrichelter Linie in einer Freigabestellung dargestellt.

Die Funktion der Rückfallsperre 17 ist wie folgt: Der in seiner unteren Position angeordnete Ladeboden wird vom Bediener mit einer Zugkraft beaufschlagt, wodurch das Führungselement 7 entlang des schrägen Führungsbahnabschnitts 9 nach oben verlagert wird und gegen die in Sperrstellung befindliche Klappe 39 trifft. Die Klappe 39 wird dadurch in ihre Freigabestellung gedrückt und schnappt nach dem Passieren des Führungselements 7 selbstständig in ihre Sperrstellung zurück, wodurch ein Zurückfallen des Führungselements 7 in den schrägen Führungsbahnabschnitt 9 verhindert wird. Der sich in einer zwischen der unteren und der oberen Position liegenden Zwischenposition befindliche Ladeboden wird nun vom Bediener durch Beaufschlagung einer Druckkraft und/oder selbsttätig aufgrund der Schwerkraft nach unter verlagert. Dabei trifft das Führungselement 7 auf die Klappe 39, die es in den zweiten, schräg nach unten verlaufenden Führungsbahnabschnitt 33 leitet, wo es dann gegen den Anschlag 15 tritt. Eine leichte Auswölbung des Führungsbahnabschnitts 33 sorgt dafür, dass das Führungselement 7 in der Anschlagsstellung, in der der Ladeboden in seiner oberen Position angeordnet ist, verbleibt.

Um den Ladeboden von der oberen in die untere Position zu verstellen, zieht der Bediener am Ladeboden, wodurch das Führungselement 7 in den dritten, schräg nach oben verlaufenden Führungsbahnabschnitt 35 gelangt und von dort, unterhalb der Klappe 39 und deren Wirkungsbereich, in den schrägen Führungsbahnabschnitt 9 zurückfällt und an dessen unteren Ende an den Anschlag 11 anstößt.

Figur 3 zeigt in perspektivischer Darstellung ein weiteres Ausführungsbeispiel der Vorrichtung 1. Teile, die bereits anhand der Figuren 1A bis 2 beschrieben wurden, sind mit gleichen Bezugszeichen versehen, so dass insofern auf deren obenstehende Beschreibung verwiesen wird. Die Kulisse 3, von der nur ein Ausschnitt dargestellt ist, weist eine außerhalb der Führungsbahn 5 angeordnete Durchgangsöffnung 43 auf, durch die zur karosseriefesten Anbringung der Kulisse 3 ein Befestigungselement gesteckt wird. Der Anschlag 11, der die untere Ladebodenposition definiert, und das mit dem Ladeboden gekoppelte Führungselement sind nicht dargestellt. Wie aus Figur 3 ersichtlich, ist die Führungsbahn 5 im Wesentlichen gleich gestaltet, wie die bei dem in Figur 2 dargestellten Ausführungsbeispiel.

Die in Figur 3 dargestellte Vorrichtung 1 unterscheidet sich von der anhand der Figur 2 beschriebenen insbesondere durch die Ausgestaltung der Rückfallsperre 17. Diese weist hier ein Sperrelement 45 auf, das um eine Achse 41 ausschließlich entgegen dem Uhrzeigersinn drehbar ist. Zu diesem Zweck ist das Sperrelement 45 mit einer nicht dargestellten Rätsche gekoppelt. Das Sperrelement 45 weist drei identische, im gleichen Winkel voneinander beabstandete Sperrarme 47 auf, von denen in jeder Winkelstellung des Sperrelements 45 jeweils einer in den schrägen Führungsbahnabschnitt 9, ein zweiter in den zweiten Führungsbahnabschnitt 33 und ein dritter Sperrarm 47 in den dritten Führungsbahnabschnitt 35 hineinragt.

Die Höhenverstellung des Ladebodens erfolgt im Wesentlichen in der gleichen Weise, wie anhand der Figur 2 beschrieben. Das heißt, bei einer Verlagerung des Ladebodens aus seiner unteren Position, in der das Führungselement 7 am Anschlag 11 anliegt, in die obere Position, in der das Führungselement 7 am Anschlag 15 anliegt, wird das in den schrägen Führungsbahnabschnitt 9 hineinragende Sperrelement 45 mittels des Führungselements 7 um einen Winkel von zumindest in etwa 120° entgegen dem Uhrzeigersinn um die Achse 41 geschwenkt, so dass das Führungselement 7 das Sperrelement 45 passieren kann. Von dort gelangt das Führungselement 7 in den zweiten, schräg nach unten in Richtung des die obere Ladebodenposition festlegenden Anschlags 15 führenden Führungsbahnabschnitt 33, wo es erneut gegen einen Sperrarm 47 des Sperrelements 45 trifft und dieses wieder um einen Winkel von 120° weiterdreht. Das Führungselement 7 gelangt schließlich gegen den Anschlag 15. Zur Verlagerung des Ladebodens in die untere Position wird dieser vom vor dem Gepäckraum stehenden Bediener mit einer Zugkraft beaufschlagt. Gelangt das Führungselement 7 dabei ungewollt in den zweiten Führungsbahnabschnitt 33 anstelle in den dritten Führungsbahnabschnitt 35, so verhindert das Sperrelement 45 ein Weiterkommen bis in den schrägen Führungsbahnabschnitt 9. Über den dritten Führungsbahnabschnitt 35 erreicht das Führungselement 7 den schrägen Führungsbahnabschnitt 9 und fällt der Schwerkraft folgend nach unten bis gegen den Anschlag 11.

## Patentansprüche

1. Vorrichtung (1) zur Führung eines höhenverstellbaren Ladebodens eines Kraftfahrzeugs, mit mindestens einer Führungsbahn (5), in der mindestens ein Führungselement (7) des Ladebodens beweglich geführt ist, wobei die Führungsbahn (5) einen schräg zu einer gedachten Horizontalen (H) verlaufenden, zwischen einer unteren und einer oberen Ladebodenposition angeordneten Führungsbahnabschnitt (9) aufweist,
**dadurch gekennzeichnet,**
**dass** die Führungsbahn (5) eine Rückfallsperre (17) aufweist, die bei einer Verlagerung des Ladebodens von der unteren in die obere Position nach Erreichen beziehungsweise Durchlaufen einer Zwischenposition den schrägen Führungsbahnabschnitt (9) sperrt.

2. Vorrichtung nach Anspruch 1,
**dadurch gekennzeichnet,**
**dass** die Rückfallsperre (17) ein in der Führungsbahn (5) verschiebbar gelagertes Sperrelement (19) aufweist, das mittels eines Mechanismus (25) in eine den schrägen Führungsbahnabschnitt (9) blockierende Sperrstellung verlagerbar ist.

3. Vorrichtung nach Anspruch 2,
**dadurch gekennzeichnet,**
**dass** der Mechanismus (25) derart ausgebildet ist, dass er bei Beaufschlagung des Sperrelements (19) mit einer über das Führungselement (7) aufgebrachten Betätigungskraft das in einer den schrägen Führungsbahnabschnitt (9) freigebende Freigabestellung gehaltene Sperrelement (19) mittels Federkraft in die Sperrstellung drückt.

4. Vorrichtung nach Anspruch 3,
**dadurch gekennzeichnet,**
**dass** das Führungselement (7) durch das mittels Federkraft in Richtung seiner Sperrstellung verlagerte Sperrelement (19) in Richtung einer oberen Endstellung, in der der Ladeboden in der obere Position angeordnet ist, kraftbeaufschlagt ist.

5. Vorrichtung nach einem der Ansprüche 2 bis 4,
**dadurch gekennzeichnet,**
**dass** das Sperrelement (19) mittels des Führungselements (7) entgegen einer Federkraft aus der Sperrstellung in die Freigabestellung verlagerbar ist.

6. Vorrichtung nach einem der Ansprüche 2 bis 5,
**dadurch gekennzeichnet,**
**dass** der Mechanismus (25) derart ausgebildet ist, dass das Sperrelement (19) in der Freigabestellung selbsttätig verrastet.

7. Vorrichtung nach Anspruch 1,
**dadurch gekennzeichnet,**
**dass** die Rückfallsperre (17) eine in der Führungsbahn (5) drehbeweglich gelagerte Klappe (39) aufweist, die mittels Federkraft an einen Anschlag angelegt ist, wobei der Anschlag so angeordnet ist, dass die Klappe (39) den schrägen Führungsbahnabschnitt (9) sperrt, und dass die Klappe (39) bei einer Verlagerung des Ladebodens von der unteren in die obere Position in eine Freigabestellung verlagerbar ist.

8. Vorrichtung nach Anspruch 7,
**dadurch gekennzeichnet,**
**dass** die Klappe (39) -in vertikaler Richtung gesehen- oberhalb der Stellung angeordnet ist, die das Führungselement (7) bei in oberer Position angeordnetem Ladeboden einnimmt.

9. Vorrichtung nach Anspruch 7 oder 8,
**dadurch gekennzeichnet,**
**dass** vom schrägen Führungsbahnabschnitt (9) ein zweiter Führungsbahnabschnitt (33) ausgeht, der zu der Stellung führt, die das Führungselement (7) bei in oberer Position angeordnetem Ladeboden einnimmt.

10. Vorrichtung nach Anspruch 9,
**dadurch gekennzeichnet,**
**dass** sich an den zweiten Führungsbahnabschnitt (33) ein dritter Führungsbahnabschnitt (35) anschließt, der -in vertikaler Richtung gesehen- unterhalb der Klappe (39) den schrägen Führungsbahnabschnitt (9) schneidet.

11. Vorrichtung nach Anspruch 1, 9 oder 10,
**dadurch gekennzeichnet,**
**dass** die Rückfallsperre (17) ein in der Führungsbahn (5) drehbeweglich gelagertes Sperrelement (45) aufweist, das mit einer Rätsche oder einer in einer Richtung wirkenden Freilaufmechanik gekoppelt ist.

12. Verfahren zur manuellen Höhenverstellung eines Ladebodens eines Kraftfahrzeugs mittels einer Vorrichtung (1) nach einem der Ansprüche 1 bis 11,
**dadurch gekennzeichnet,**
**dass** zur Verlagerung des in einer unteren Position angeordneten Ladebodens dieser zunächst mit einer Zugkraft beaufschlagt wird, wodurch der Ladeboden in eine erste Zwischenposition verlagert wird, und dass dann der Ladeboden in Folge der Schwerkraft und/oder einer auf ihn aufgebrachten Druckkraft in die obere Position verlagert wird.

13. Verfahren nach Anspruch 12,
**dadurch gekennzeichnet,**
**dass** zur Verlagerung des in seiner oberen Position angeordneten Ladebodens dieser zunächst mit einer Zugkraft beaufschlagt wird, wodurch der Ladeboden in eine zweite Zwischenposition verlagert wird, und dass dann der Ladeboden in Folge der Schwerkraft und/oder einer auf ihn aufgebrachten Druckkraft in die untere Position verlagert wird.

## Claims

1. Device (1) for the guidance of a vertically adjustable load floor of a motor vehicle, with at least one guideway (5) in which at least one guide element (7) of the load floor is movably guided, whereby the guideway (5) has a guideway section (9) extending at an angle relative to an imaginary horizontal line (H) between a lower and an upper load floor position,
**characterised in that**
the guideway (5) incorporates a fall-back catch (17) which locks the inclined guideway section (9) after reaching or passing through an intermediate position, when the load floor is moved from the lower to the upper position.

2. Device according to claim 1,
**characterised in that**
the fall-back catch (17) incorporates a locking element (19) movably mounted in the guideway (5), which can be moved into a locking position blocking the inclined guideway section (9) by means of a mechanism (25).

3. Device according to claim 2,
**characterised in that**
the mechanism (25) is designed to press the locking element (19), which is held in a release position in which the inclined guideway section (9) is released, into the locking position by means of spring force, if an actuating force is applied to the locking element (19) by way of the guide element (7).

4. Device according to claim 3,
**characterised in that**
a force acting in the direction of an upper end position, in which the load floor is located in the upper position, is applied to the guide element (7) by the locking element (19) displaced towards its locking position by spring force.

5. Device according to any of claims 2 to 4,
**characterised in that**
the locking element (19) can be moved from the locking position into the release position against spring force by means of the guide element (7).

6. Device according to any of claims 2 to 5,
**characterised in that**
the mechanism (25) is so designed that the locking element (19) automatically latches in the release position.

7. Device according to claim 1,
**characterised in that**
the fall-back catch (17) incorporates a flap (39) rotatably mounted in the guideway (5) and pressed against a stop by spring force, whereby the stop is so arranged that the flap (39) blocks the inclined guideway section (9) and that the flap (39) can be moved into a release position when the load floor is moved from the lower to the upper position.

8. Device according to claim 7,
**characterised in that**
the flap (39) - viewed in the vertical direction - is located above the position adopted by the guide element (7) in the upper position of the load floor.

9. Device according to claim 7 or 8,
**characterised in that** a second guideway section (33) leading to the position adopted by the guide element (7) in the upper position of the load floor adjoins the inclined guideway section (9).

10. Device according to claim 9,
**characterised in that**
a third guideway section (35) intersecting the inclined guideway section (9) below the flap (39) - viewed in the vertical direction - adjoins the second guideway section (33).

11. Device according to claim 1, 9 or 10,
**characterised in that**
the fall-back catch (17) incorporates a locking element (45) rotatably mounted in the guideway (5), which is coupled to a ratchet or a one-way clutch.

12. Method for the vertical adjustment of a load floor of a motor vehicle by means of a device according to any of claims 1 to 11,
**characterised in that**
the load floor located in a lower position is moved initially by the application of a tensile force, whereby the load floor is brought into a first intermediate position, and **in that** it is then moved to the upper position by means of gravity and/or an applied pressure.

13. Method according to claim 12,
**characterised in that**
the load floor located in its upper position is moved initially by the application of a tensile force, whereby the load floor is brought into a second intermediate position, and **in that** it is then moved to the lower position by means of gravity and/or an applied pressure.

## Revendications

1. Dispositif (1) de guidage d'un plateau de chargement, réglable en hauteur, d'un véhicule automobile, comprenant au moins une voie de guidage (5), dans laquelle au moins un élément de guidage (7) du plateau de chargement est monté mobile, la voie de guidage (5) comportant un tronçon de guidage (9) orienté en oblique par rapport à une horizontale imaginaire et agencé entre une position inférieure et une position supérieure du plateau de chargement, **caractérisé en ce que** la voie de guidage (5) comporte un bloqueur de retombée (17) qui, pendant un déplacement du plateau de chargement de la position inférieure vers la position supérieure, bloque le tronçon de guidage oblique (9) lorsqu'une position intermédiaire est atteinte ou lorsque celle-ci est dépassée.

2. Dispositif selon la revendication 1, **caractérisé en ce que** le bloqueur de retombée (17) comporte un élément de blocage (19), qui est monté mobile dans la voie de guidage (5) et qui peut être amené par un mécanisme (25) dans une position de blocage bloquant le tronçon de guidage oblique (9).

3. Dispositif selon la revendication 2, **caractérisé en ce que** le mécanisme (25) est conçu de telle sorte que, sous l'effet d'une force d'actionnement exercée par l'intermédiaire de l'élément de guidage (7) sur l'élément de blocage (19), ledit mécanisme par une force de ressort pousse dans une position de blocage l'élément de blocage (19), qui était maintenu dans une position de relâchement libérant le tronçon de guidage oblique (9).

4. Dispositif selon la revendication 3, **caractérisé en ce que** l'élément de guidage (7) est sollicité par une force en direction d'une position finale supérieure, dans laquelle le plateau de chargement est situé dans la position supérieure, par l'intermédiaire de l'élément de blocage (19) amené par une force de ressort en direction de sa position de blocage.

5. Dispositif selon l'une quelconque des revendications 2 à 4, **caractérisé en ce que** l'élément de blocage (19) peut être amené par l'intermédiaire de l'élément de guidage (7), à l'encontre d'une force de ressort, hors de la position de blocage dans une position de relâchement.

6. Dispositif selon l'une quelconque des revendications 2 à 5, **caractérisé en ce que** le mécanisme (25) est conçu de telle sorte que l'élément de blocage (19) se bloque automatiquement dans la position de relâchement.

7. Dispositif selon la revendication 1, **caractérisé en ce que** le bloqueur de retombée (17) comporte un clapet (39), qui est monté rotatif dans la voie de guidage (5) et qui, sous l'effet d'une force de ressort, est en appui contre une butée, la butée étant agencée de telle sorte que le clapet (39) bloque le tronçon de guidage oblique (9) et **en ce que** le clapet (39) peut être amené dans une position de relâchement lorsque le plateau de chargement se déplace de la position inférieure dans la position supérieure.

8. Dispositif selon la revendication 7, **caractérisé en ce que** le clapet (39) est agencé - par référence à la direction verticale - au-dessus de la position dans laquelle est amené l'élément de guidage (7) lorsque le plateau de chargement est dans la position supérieure.

9. Dispositif selon la revendication 7 ou 8, **caractérisé en ce que** dans le prolongement du premier tronçon de guidage oblique (9) est disposé un deuxième tronçon de guidage (33) qui guide vers la position dans laquelle l'élément de guidage (7) est amené lorsque le plateau de chargement est dans la position supérieure.

10. Dispositif selon la revendication 9, **caractérisé en ce que** le deuxième tronçon de guidage (33) se prolonge par un troisième tronçon de guidage (35), qui coupe le tronçon de guidage oblique (9) - par référence à la direction verticale - en dessous du clapet (39).

11. Dispositif selon la revendication 1, 9 ou 10, **caractérisé en ce que** le bloqueur de retombée (17) comporte un élément de blocage (45), qui est monté rotatif dans la voie de guidage (5) et qui est couplé à un rochet ou un mécanisme à roue libre agissant dans une direction.

12. Procédé de réglage en hauteur manuel d'un plateau de chargement d'un véhicule automobile au moyen d'un dispositif (1) selon l'une quelconque des revendications 1 à 11, **caractérisé en ce que** pour le déplacement du plateau de chargement, disposé dans une position inférieure, celui-ci est d'abord sollicité par une force de traction, moyennant quoi le plateau de chargement est amené dans une première position intermédiaire et **en ce que** le plateau de chargement est amené ensuite dans la position supérieure sous l'effet de la force de gravité et/ou d'une force de pression appliquée sur celui-ci.

13. Procédé selon la revendication 12, **caractérisé en ce que** pour le déplacement du plateau de chargement, disposé dans une position supérieure, celui-ci est d'abord sollicité par une force de traction, moyennant quoi le plateau de chargement est amené dans une deuxième position intermédiaire et **en ce que** le plateau de chargement est amené ensuite dans la position inférieure sous l'effet de la force de gravité et/ou d'une force de pression appliquée sur celui-ci.
